# DEMANDE DE BREVET EUROPEEN

(11) **EP 4 810 786 A1**
(43) Date de publication de la demande: **23.09.2026**
(21) Numéro de dépôt: 26165137.6
(22) Date de dépôt: 16.03.2026
(51) Int. Cl.: F02K 1/72, F02K 1/76, H02P 3/18

(54) **SYSTÈME D'ACTIONNEMENT D'UNE UNITÉ D'INVERSION DE POUSSÉE D'UN MOTEUR À RÉACTION D'UN AÉRONEF**

(30) Priorité: 17.03.2025 FR 2502651
(71) Demandeur: Airbus Operations (S.A.S.), 31060 Toulouse Cedex 9 (FR)
(72) Inventeur: LEROY, Aubry, 31060 TOULOUSE (FR)
(74) Mandataire: Cabinet Le Guen Maillet

(57) **Abrégé**

Il est proposé un système d'actionnement (200) d'une unité d'inversion de poussée (204) d'un moteur à réaction d'un aéronef . Le système d'actionnement comprend (au moins) un actionneur (203) associé à (au moins) un moteur électrique (202) pour une mise en mouvement de l'unité d'inversion de poussée depuis une position escamotée vers une position déployée (dans une phase d'extension) ou inversement (dans une phase de rétraction). Le moteur électrique est de type dissipatif et configuré pour dissiper au moins une partie de l'énergie générée par celui-ci quand il contrebalance une charge de traction subie par le système d'actionnement pendant la phase d'extension. L'utilisation d'un moteur électrique dissipatif permet de ne nécessiter ni banc de résistances ni moyens mécaniques de dissipation d'énergie, et donc de préserver la fiabilité de l'électronique de commande du moteur électrique tout en limitant le coût, le poids et l'encombrement du système d'actionnement.

## Description

### DOMAINE TECHNIQUE

Le domaine de l'invention est celui des inverseurs de poussée, aussi appelés unités d'inversion de poussée (ou TRU pour « Thrust Reverser Unit » en anglais), pour les moteurs à réaction (aussi appelés turboréacteurs) d'aéronefs.

Plus précisément, la présente invention concerne un système d'actionnement d'une unité d'inversion de poussée (TRU) d'un moteur à réaction d'un aéronef. Un tel système d'actionnement est aussi appelé système d'actionnement d'inverseur de poussée (ou TRAS pour « Thrust Reverser Actuation System » en anglais).

### ETAT DE LA TECHNIQUE ANTERIEURE

L'inverseur de poussée d'un moteur à réaction d'aéronef est un dispositif permettant, par interposition d'un obstacle (c'est-à-dire par déploiement d'un élément de blocage) dans un jet de sortie du moteur à réaction, de dévier ce jet vers l'avant dans le but de ralentir l'aéronef (par apport d'un freinage supplémentaire) et ainsi de ne pas trop solliciter les freins des roues et de réduire la distance de freinage lors de l'atterrissage.

L'inverseur de poussée est par exemple intégré à une nacelle (« engine pod » en anglais), qui est un élément à la forme fuselée, constitué d'une structure spécialement étudiée pour contenir le moteur et son bâti, et pour certains types d'aéronefs le train d'atterrissage. Sur cette structure viennent par exemple se fixer le carénage d'entrée d'air sur l'avant, des capots sur les côtés et l'inverseur de poussée à l'arrière.

Dans une première configuration particulière, le système d'actionnement (TRAS) comprend un unique actionneur associé à (c'est-à-dire actionné par) un unique moteur électrique, pour une mise en mouvement de l'unité d'inversion de poussée (TRU), et plus précisément de l'élément de blocage, depuis une position escamotée (repliée) vers une position déployée, dans une phase d'extension, ou depuis la position déployée vers la position escamotée, dans une phase de rétraction.

D'autres configurations sont également possibles :
- un unique moteur électrique actionne plusieurs actionneurs ;
- plusieurs moteurs électriques, chacun actionnant un seul actionneur ; et
- plusieurs moteurs électriques, chacun actionnant plusieurs actionneurs.

Dans un seul souci de simplification, la discussion qui suit est présentée en considérant la première configuration précitée (un unique moteur électrique actionne un unique actionneur). Cette discussion peut toutefois aisément être transposée aux autres configurations listées plus haut.

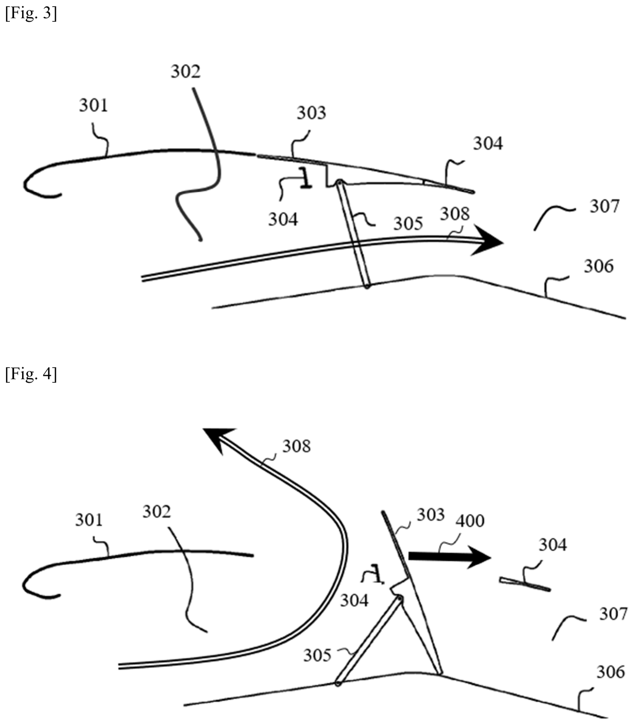

Pendant le déploiement de l'unité d'inversion de poussée, l'actionneur se déploie sous l'effet d'une charge de traction (voir ci-après la description de la Fig. 4). Cela signifie que le moteur électrique fonctionne dans le quadrant « générateur », et génère donc de l'énergie. En d'autres termes, le moteur électrique génère de l'énergie quand il contrebalance la charge de traction subie par le système d'actionnement pendant la phase d'extension.

Il est préférable que cette énergie générée soit dissipée plutôt qu'injectée dans le réseau électrique de l'aéronef, afin de ne pas perturber ce dernier ainsi que les équipements qui y sont connectés.

Une première technique connue, pour dissiper l'énergie générée par le moteur électrique pendant le déploiement de l'unité d'inversion de poussée, consiste à réaliser une dissipation électrique, en utilisant des éléments résistifs (un banc de résistances par exemple) compris dans une circuiterie électronique de commande du moteur électrique. Un inconvénient de cette première technique connue est que le banc de résistances constitue un coût, un poids et un encombrement supplémentaires. En outre, le banc de résistances est une contrainte pour l'électronique car il convertit l'énergie en chaleur, ce qui tend à dégrader la fiabilité de l'électronique.

Une deuxième technique connue, pour dissiper l'énergie générée par le moteur électrique pendant le déploiement de l'unité d'inversion de poussée, consiste à utiliser des moyens mécaniques de dissipation d'énergie. Un inconvénient de cette deuxième technique connue est que les moyens mécaniques de dissipation d'énergie constituent un coût, un poids et un encombrement supplémentaires.

Les première et deuxième solutions connues précitées donnent satisfaction, mais il existe un besoin de les améliorer encore, notamment en préservant la fiabilité de l'électronique de commande du moteur électrique (pour la première technique) et en ne nécessitant pas de moyens (que ce soit un banc de résistances ou des moyens mécaniques de dissipation d'énergie) constituant un coût, un poids et un encombrement supplémentaires.

### EXPOSE DE L'INVENTION

Il est proposé un système d'actionnement d'une unité d'inversion de poussée d'un moteur à réaction d'un aéronef, le système d'actionnement comprenant au moins un actionneur associé à au moins un moteur électrique pour une mise en mouvement de l'unité d'inversion de poussée depuis une position escamotée vers une position déployée, dans une phase d'extension, ou depuis la position déployée vers la position escamotée, dans une phase de rétraction. Ledit au moins un moteur électrique est de type dissipatif et configuré pour dissiper au moins une partie de l'énergie E générée par ledit au moins un moteur électrique quand ledit au moins un moteur électrique contrebalance une charge de traction subie par le système d'actionnement pendant la phase d'extension.

Ainsi, l'utilisation d'au moins un moteur électrique dissipatif permet de dissiper au moins une partie de l'énergie générée par ledit au moins un moteur électrique pendant le déploiement de l'unité d'inversion de poussée. Ceci permet de ne nécessiter ni banc de résistances ni moyens mécaniques de dissipation d'énergie, et donc de préserver la fiabilité de l'électronique de commande dudit au moins un moteur électrique tout en limitant le coût, le poids et l'encombrement du système d'actionnement (TRAS) de l'unité d'inversion de poussée (TRU).

Selon un mode de réalisation particulier, ledit au moins un moteur électrique dissipatif est configuré pour dissiper au moins 10% de l'énergie E.

Selon un mode de réalisation particulier, ledit au moins un moteur électrique dissipatif comprend un noyau de stator qui est solide et non feuilleté.

Selon un mode de réalisation particulier, ledit au moins un moteur électrique dissipatif comprend un noyau de stator qui est feuilleté et qui comprend au maximum N feuillets épais possédant chacun une épaisseur supérieure ou égale à Tₘᵢₙ, avec *N* ∈ [1, 100] et Tₘᵢₙ = 2 mm.

Selon un mode de réalisation particulier, le système comprend une butée mécanique dimensionnée pour encaisser un choc avec ledit au moins un actionneur, et ainsi dissiper mécaniquement une énergie résiduelle dudit au moins un actionneur, quand ledit au moins un actionneur est en fin de course de la phase d'extension et possède une vitesse résiduelle après que ledit au moins un moteur électrique dissipatif a dissipé au moins une partie de l'énergie E.

Selon un mode de réalisation particulier, le système d'actionnement comprenant une circuiterie électronique de commande dudit au moins un moteur électrique, comprenant elle-même au moins un élément résistif configuré pour dissiper électriquement une énergie résiduelle dudit au moins un actionneur, quand ledit au moins un actionneur est en fin de course de la phase d'extension et possède une vitesse résiduelle après que ledit au moins un moteur électrique dissipatif a dissipé au moins une partie de l'énergie E.

Selon un mode de réalisation particulier, le système d'actionnement comprend une circuiterie électronique de commande dudit au moins un moteur électrique, configurée pour transférer vers un réseau électrique de l'aéronef une énergie résiduelle dudit au moins un actionneur, quand ledit au moins un actionneur est en fin de course de la phase d'extension et possède une vitesse résiduelle après que ledit au moins un moteur électrique dissipatif a dissipé au moins une partie de l'énergie E.

Il est aussi proposé un aéronef comprenant un système d'actionnement tel qu'évoqué ci-dessus, dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en perspective, un aéronef équipé de nacelles intégrant chacune un moteur à réaction et un système d'actionnement d'une unité d'inversion de poussée selon l'invention ;
[Fig. 2] illustre schématiquement un système d'actionnement d'une unité d'inversion de poussée, dans un mode de réalisation ;
[Fig. 3] illustre schématiquement une unité d'inversion de poussée en position escamotée ;
[Fig. 4] illustre schématiquement une unité d'inversion de poussée en position déployée ;
[Fig. 5] illustre des courbes de distribution de la charge d'un système d'actionnement en fonction de sa course, correspondant à différents cas (phase d'extension avec un système d'actionnement classique ou selon l'invention, et phase de rétraction avec un système d'actionnement classique ou selon l'invention) ; et
[Fig. 6] illustre schématiquement un exemple d'architecture matérielle de la circuiterie électronique de commande du moteur électrique, apparaissant sur la Fig. 2.

### EXPOSE DETAILLE DE MODES DE REALISATION

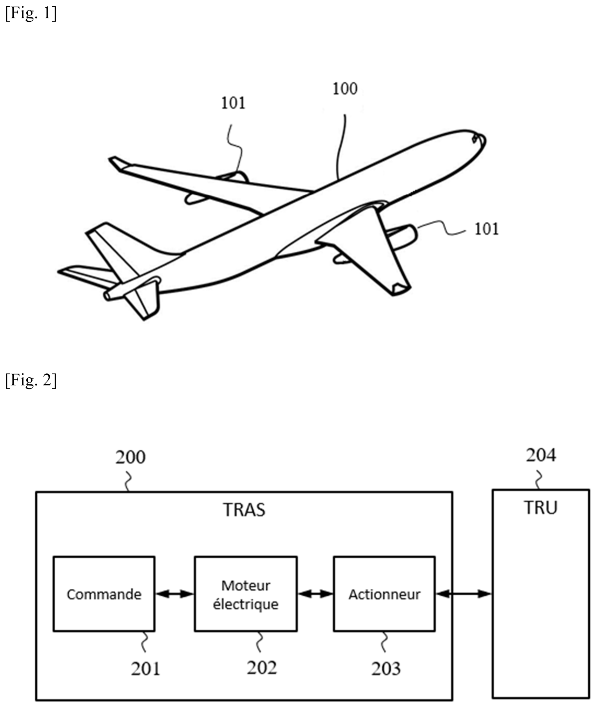

La **Fig. 1** illustre schématiquement, en perspective, un aéronef 100 équipé de deux nacelles (« pod » en anglais) 101 (une sous chaque aile) intégrant chacune un moteur à réaction (turboréacteur) et un système (TRAS) d'actionnement d'une unité d'inversion de poussée (TRU), selon l'invention. Dans des variantes, l'aéronef peut comprendre un nombre différent de nacelles.

La **Fig. 2** illustre schématiquement un système 200 (TRAS) d'actionnement d'une unité d'inversion de poussée 204 (TRU), dans une configuration basique. Dans cette configuration basique, le système d'actionnement 200 comprend un actionneur 203, un moteur électrique 202 et une circuiterie électronique 201 de commande du moteur électrique. L'actionneur 203 est entraîné (actionné) par le moteur électrique 202, sous commande de la circuiterie électronique 201, pour une mise en mouvement de l'unité d'inversion de poussée 204 depuis une position escamotée vers une position déployée, dans une phase d'extension, ou depuis la position déployée vers la position escamotée, dans une phase de rétraction.

La présente invention ne se limite pas à cette configuration basique (dans laquelle un unique moteur électrique actionne un unique actionneur) mais s'applique également aux autres configurations suivantes :
- un unique moteur électrique actionne plusieurs actionneurs ;
- plusieurs moteurs électriques, chacun actionnant un seul actionneur ; et
- plusieurs moteurs électriques, chacun actionnant plusieurs actionneurs.

Dans un seul souci de simplification, on ne considère dans la suite de la description que la configuration basique. Comme déjà mentionné plus haut, la présente invention n'est pas limitée à cette dernière et s'applique également aux autres configurations précitées.

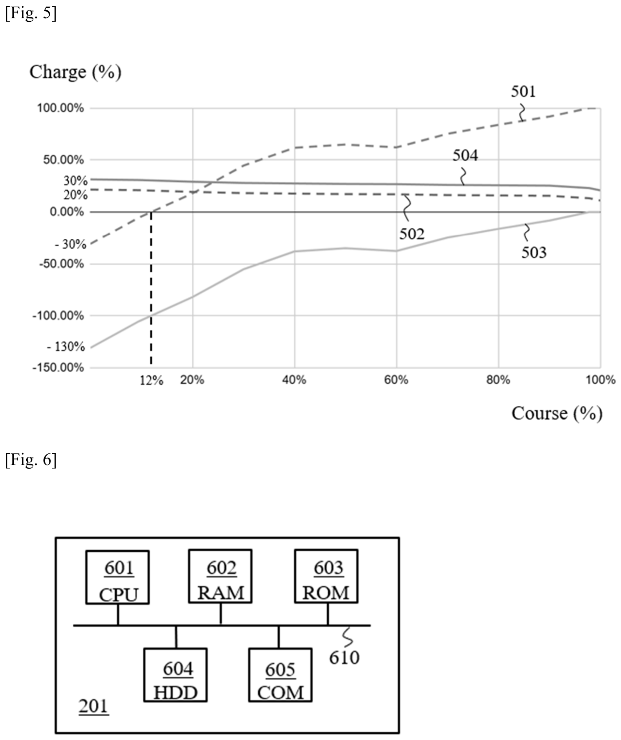

La **Fig. 6** illustre schématiquement un exemple d'architecture matérielle de la circuiterie électronique 201 de commande du moteur électrique, qui comprend alors, reliés par un bus de communication 610 : un processeur ou CPU (« Central Processing Unit » en anglais) 601 ; une mémoire vive RAM (« Random Access Memory » en anglais) 602 ; une mémoire morte ROM (« Read Only Memory » en anglais) 603, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 604 ;et au moins une interface de communication 605. Le processeur 601 est capable d'exécuter des instructions qui forment un programme d'ordinateur et qui sont chargées dans la RAM 602 à partir de la ROM 603, d'une mémoire externe (non représentée), d'un autre support de stockage (tel qu'une carte SD), ou d'un réseau de communication (non représenté). Lorsque la circuiterie électronique 201 est mise sous tension, le processeur 601 est capable de lire dans la RAM 602 les instructions précitées et de les exécuter. Quand elles sont lues (depuis la RAM 602 ou un support de stockage) et exécutées par le processeur 601, ces instructions (qui forment un programme d'ordinateur) entraînent l'exécution, par le processeur 601, des comportements, étapes et algorithme décrits ici. Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). Il peut être rajouté un dispositif électronique, comme un onduleur, pour transformer le signal de commande généré par la circuiterie électronique 201 en un signal électrique compatible du moteur électrique.

La **Fig. 3** illustre schématiquement l'unité d'inversion de poussée 204, dans une implémentation particulière, en position escamotée. On suppose que l'unité d'inversion de poussée est intégrée dans une nacelle comportant un capot comprenant une partie de capot fixe 301 et une partie de capot mobile (formant manchon coulissant) 304 en translation le long d'un axe longitudinal de la nacelle. On suppose également qu'un moteur à réaction (turboréacteur) à double flux (non représenté) est disposé dans le volume interne de la nacelle délimité par le capot. L'unité d'inversion de poussée est du type « manchon coulissant » (ou « Translating Cowl » en anglais) et comprend : la partie de capot mobile (formant manchon coulissant 304), la partie de capot fixe 301, une paroi externe 306 du moteur à réaction (qui peut être réalisée par un capot interne entourant le moteur à réaction), une porte de blocage (porte pivotante) 303 et un organe (bras) de liaison 305 (possédant une première extrémité montée via une liaison pivot sur la paroi externe 306 du moteur à réaction et une deuxième extrémité à laquelle est fixée la porte de blocage 303). Dans la position escamotée illustrée sur la Fig. 3, le flux d'air secondaire (symbolisé par la flèche référencée 308) est direct. Il traverse la nacelle depuis l'avant vers l'arrière, avec la porte de blocage 303 escamotée et s'étendant dans le prolongement des parois des parties de capot fixe 301 et mobile 304 de la nacelle, de façon que le flux d'air 308 transite par un canal de passage 302 et sorte uniquement par l'arrière 307 de la nacelle, ce qui génère une force de poussée dirigée vers l'avant. Seul le bras de liaison 305 se trouve dans le flux d'air 308.

La **Fig. 4** illustre schématiquement l'unité d'inversion de poussée 204, dans la même implémentation particulière que sur la Fig. 3, mais en position déployée. Dans cette position déployée, le flux d'air (toujours symbolisé par la flèche référencée 308) est inversé (« reverse » en anglais). La partie de capot mobile (manchon coulissant) 304 est poussée vers l'arrière par le système d'actionnement 200 (TRAS), permettant ainsi de déployer la porte de blocage 303 (le bras de liaison 305 pivote grâce à la liaison pivot avec la paroi externe 306 du moteur à réaction). Dès lors, le flux d'air 308 est bloqué par la porte de blocage 303 et redirigé vers l'avant, ce qui génère une force de poussée dirigée vers l'arrière (aussi appelée « contrepoussée) qui vient s'ajouter au freinage des roues de l'aéronef. Le système d'actionnement 200 (TRAS) subit une charge de traction (symbolisée par la flèche référencée 400). Cette charge est contrebalancée par le moteur électrique, par exemple à l'aide d'engrenages et/ou de mécanismes de vis à billes ou rouleaux.

L'unité d'inversion de poussée 204 (TRU), comme le système 200 (TRAS) qui permet de l'actionner, fonctionne de manière binaire :
- dans une phase d'extension, elle passe de la position escamotée à la position déployée ; et
- dans une phase de rétraction, elle passe de la position déployée à la position escamotée.

La **Fig. 5** illustre diverses courbes de distribution de la charge d'un système d'actionnement en fonction de sa course, correspondant à divers cas. On s'intéresse d'abord aux deux courbes suivantes :
- la courbe référencée 501, correspondant au cas d'une phase d'extension avec un système d'actionnement (TRAS) classique ; et
- la courbe référencée 502, correspondant au cas d'une phase de rétraction avec un système d'actionnement (TRAS) classique.

Ces courbes ne se veulent pas un reflet exact de la réalité, mais visent uniquement à illustrer la façon dont l'évolution de la charge en fonction de la course est affectée. On considère par exemple les hypothèses suivantes : la vitesse est considérée comme constante sur toute la course ; l'efficacité du système mécanique est de 100 % ; l'enveloppe MIN/MAX n'est pas prise en compte ; et la capacité de décélération n'est pas prise en compte.

On suppose par exemple que pendant la phase d'extension, la vitesse de rotation du moteur est positive, constante et égale à 8000 Tr/min. Dans ce cas, quand la charge est positive, le moteur électrique fonctionne dans le quadrant « générateur » (et génère donc de l'énergie qu'il convient de dissiper) ; et quand la charge est négative, le moteur électrique fonctionne dans le quadrant « moteur » (pas de génération d'énergie à dissiper).

On voit sur la courbe 501 que pendant la phase d'extension, le moteur électrique démarre dans le quadrant « moteur » (charge égale à -30 % de la charge maximale pour 0 % de la course), puis se déplace dans le quadrant « générateur » (de 0 % de la charge maximale (pour 12 % de la course) jusqu'à 100 % de la charge maximale (pour 100 % de la course), qui est le point de référence).

De même, on suppose par exemple que pendant la phase de rétraction, la vitesse de rotation du moteur est négative, constante et égale à 2500 Tr/min. Dans ce cas, quand la charge est négative, le moteur électrique fonctionne dans le quadrant « générateur » (et génère donc de l'énergie qu'il convient de dissiper) ; et quand la charge est positive, le moteur électrique fonctionne dans le quadrant « moteur » (pas de génération d'énergie à dissiper).

On voit sur la courbe 502 que pendant la phase de rétraction, le moteur électrique est toujours dans le quadrant « moteur » (charge égale à 20 % de la charge maximale, pour toute la course (0 à 100%)).

En résumé, avec un système d'actionnement (TRAS) classique, c'est seulement pendant une partie de la phase d'extension (c'est-à-dire quand la charge est positive ; pour la portion de course comprise entre 12 % et 100 % dans l'exemple de la courbe 501) que le moteur électrique fonctionne dans le quadrant « générateur », et génère donc de l'énergie qu'il convient de dissiper (plutôt que de l'injecter dans le réseau électrique de l'aéronef).

Pour résoudre ce problème technique, le principe général de la présente invention consiste à utiliser un moteur électrique 202 de type dissipatif et configuré pour dissiper au moins une partie de l'énergie E qu'il génère quand il contrebalance la charge de traction subie par le système d'actionnement 200 (TRAS) pendant la phase d'extension. Dans une implémentation particulière, le moteur électrique dissipatif 202 est configuré pour dissiper au moins 10% de l'énergie E. S'approcher de 100% d'énergie dissipée directement dans le moteur électrique dissipatif permet de limiter l'utilisation des moyens complémentaires (par exemple ceux décrits plus bas) pour dissiper l'énergie résiduelle (c'est-à-dire l'énergie non dissipée par le moteur électrique dissipatif), et notamment d'éviter que de l'énergie générée par le moteur électrique soit injectée dans le réseau électrique de l'aéronef.

La **Fig. 5** illustre également les deux courbes suivantes :
- la courbe référencée 503, correspondant au cas d'une phase d'extension avec un système d'actionnement (TRAS) selon l'invention ; et
- la courbe référencée 504, correspondant au cas d'une phase de rétraction avec un système d'actionnement (TRAS) selon l'invention.

On voit sur la courbe 503 que pendant la phase d'extension, le moteur électrique est toujours dans le quadrant « moteur » (de -130 % de la charge maximale pour 0 % de la course jusqu'à 0 % de la charge maximale pour 100 % de la course). Ainsi, dans cet exemple, le moteur électrique ne génère pas d'énergie qu'il convient de dissiper (l'énergie est dissipée par le moteur électrique lui-même). En valeur absolue, le décalage entre les courbes 501 (sans l'invention) et 503 (avec l'invention) est égal à 100%.

On voit sur la courbe 504 que pendant la phase de rétraction, le moteur électrique est toujours dans le quadrant « moteur » (charge égale à 30 % de la charge maximale, pour toute la course (0 à 100%)). En valeur absolue, le décalage entre les courbes 502 (sans l'invention) et 504 (avec l'invention) n'est que de 10%.

Dans un premier mode de réalisation, afin de lui conférer le caractère dissipatif souhaité, le moteur électrique 202 comprend un noyau de stator qui est solide et non feuilleté, et qui va donc générer des courants de Foucault (« eddy currents » en anglais) permettant de dissiper de l'énergie. Plus précisément, les courants de Foucault dans un tel noyau de stator dissipent l'énergie selon l'équation suivante : $Pe = \frac{2 . {B}^{2} . {t}^{2} . {f}^{2}}{ρβ}$, où :
- Pe est la puissance dissipée par unité de masse dans le noyau de stator (W/kg) ;
- t est l'épaisseur du matériau, ici l'épaisseur du noyau de stator solide et non feuilleté ;
- B est l'amplitude maximale du champ magnétique (T) ;
- ρ est la résistivité du matériau (Ω m) ;
- β est un coefficient lié à la structure géométrique ; et
- f la fréquence de variation du champ magnétique (cette fréquence f est liée à la vitesse du moteur).

On rappelle qu'habituellement le noyau de stator d'un moteur électrique n'est pas solide mais est feuilleté (avec plusieurs dizaines, voire plusieurs centaines, de feuilles), afin de réduire au maximum les courants de Foucault (normalement autour de 0,1 à 0,2% de la puissance nominale d'une machine électrique), car ces derniers entraînent généralement une perte de puissance et une dégradation des performances.

Au contraire, et de manière contre-intuitive car cela se traduit par un moteur électrique à plus faible performance, la présente invention utilise les courants de Foucault pour dissiper de l'énergie. La puissance ainsi dissipée Pe étant proportionnelle à t² (où t est l'épaisseur du matériau), la quantité d'énergie dissipée peut être élevée.

Lorsque l'actionneur atteint sa fin de course lors de la phase d'extension (c'est-à-dire approche 100 % de la course), la charge du système d'actionnement est maximale (voir courbe 501 sur la Fig. 5) et l'actionneur doit être arrêté. Or quand la vitesse du moteur électrique est proche de zéro, la dissipation d'énergie par le moteur électrique dissipatif est quasi nulle. En effet, les courants de Foucault, et donc la puissance dissipée, sont proportionnels à f², et donc aussi au carré de la vitesse du moteur électrique (puisque la fréquence f est liée à cette vitesse).

Dans un mode de réalisation, une ou plusieurs des solutions complémentaires suivantes sont mises en œuvre pour dissiper une énergie résiduelle de l'actionneur, quand l'actionneur est en fin de course de la phase d'extension et possède une vitesse résiduelle (après que le moteur électrique dissipatif a dissipé au moins une partie de l'énergie qu'il génère quand il contrebalance la charge de traction subie par le système d'actionnement pendant la phase d'extension) :
- une butée mécanique est dimensionnée pour encaisser un choc avec l'actionneur, et ainsi dissiper mécaniquement au moins une partie de l'énergie résiduelle précitée ;
- la circuiterie électronique 201 de commande du moteur électrique comprend au moins un élément résistif configuré pour dissiper électriquement au moins une partie de l'énergie résiduelle précitée ; et
- la circuiterie électronique 201 de commande du moteur électrique est configurée pour transférer vers le réseau électrique de l'aéronef au moins une partie de l'énergie résiduelle précitée.

Dans un deuxième mode de réalisation (variante correspondant à une configuration intermédiaire entre le noyau de stator stratifié conventionnel et le noyau de stator solide et non feuilleté du premier mode de réalisation), afin de lui conférer le caractère dissipatif souhaité, le moteur électrique comprend un noyau de stator qui est feuilleté et qui comprend au maximum N feuillets épais possédant chacun une épaisseur supérieure ou égale à Tₘᵢₙ, avec *N* ∈ [1,100] et Tₘᵢₙ = 2 mm.

## Revendications

1. Système d'actionnement (200, TRAS) d'une unité d'inversion de poussée (204, TRU) d'un moteur à réaction d'un aéronef (100), le système d'actionnement comprenant au moins un actionneur (203) associé à au moins un moteur électrique (202) pour une mise en mouvement de l'unité d'inversion de poussée depuis une position escamotée vers une position déployée, dans une phase d'extension, ou depuis la position déployée vers la position escamotée, dans une phase de rétraction, **caractérisé en ce que** ledit au moins un moteur électrique comprend un noyau de stator appartenant à un groupe comprenant :
- un noyau de stator qui est solide et non feuilleté ; et
- un noyau de stator qui est feuilleté et qui comprend N feuillets épais possédant chacun une épaisseur supérieure ou égale à Tₘᵢₙ, avec N ∈ [1, 100] et Tₘᵢₙ = 2 mm ;
ledit noyau de stator conférant au moteur électrique un caractère dissipatif et étant configuré pour dissiper au moins une partie de l'énergie E générée par ledit au moins un moteur électrique quand ledit au moins un moteur électrique contrebalance une charge de traction subie par le système d'actionnement pendant la phase d'extension.

2. Système d'actionnement selon la revendication 1, dans lequel ledit noyau de stator est configuré pour dissiper au moins 10% de l'énergie E.

3. Système d'actionnement selon l'une quelconque des revendications 1 et 2, comprenant une butée mécanique dimensionnée pour encaisser un choc avec ledit au moins un actionneur (203), et ainsi dissiper mécaniquement une énergie résiduelle dudit au moins un actionneur, quand ledit au moins un actionneur est en fin de course de la phase d'extension et possède une vitesse résiduelle après que ledit au moins un moteur électrique (202) a dissipé au moins une partie de l'énergie E.

4. Système d'actionnement selon l'une quelconque des revendications 1 et 2, comprenant une circuiterie électronique (201) de commande dudit au moins un moteur électrique (202), comprenant elle-même au moins un élément résistif configuré pour dissiper électriquement une énergie résiduelle dudit au moins un actionneur, quand ledit au moins un actionneur est en fin de course de la phase d'extension et possède une vitesse résiduelle après que ledit au moins un moteur électrique a dissipé au moins une partie de l'énergie E.

5. Système d'actionnement selon l'une quelconque des revendications 1 et 2, comprenant une circuiterie électronique (201) de commande dudit au moins un moteur électrique (202), configurée pour transférer vers un réseau électrique de l'aéronef une énergie résiduelle dudit au moins un actionneur, quand ledit au moins un actionneur est en fin de course de la phase d'extension et possède une vitesse résiduelle après que ledit au moins un moteur électrique a dissipé au moins une partie de l'énergie E.

6. Aéronef (100) comprenant un système (200, TRAS), selon l'une quelconque des revendications 1 à 5, d'actionnement d'une unité d'inversion de poussée (204, TRU) de l'aéronef.
